Europäisches Patentamt

(19) European Patent Office  (11) Publication number: **0 034 485**
Office européen des brevets  **B1**

(12) **EUROPEAN PATENT SPECIFICATION**

(45) Date of publication of patent specification: **06.05.87**  (51) Int. Cl.⁴: **G 06 F 3/02**

(21) Application number: **81300609.5**

(22) Date of filing: **13.02.81**

(54) **Keyboard apparatus.**

(30) Priority: **13.02.80 JP 17049/80**
**01.10.80 JP 138166/80**

(43) Date of publication of application:
**26.08.81 Bulletin 81/34**

(45) Publication of the grant of the patent:
**06.05.87 Bulletin 87/19**

(84) Designated Contracting States:
**DE FR GB NL**

(56) References cited:
**DE-A-2 119 640**
**DE-A-3 017 469**
**FR-A-2 405 823**
**US-A-3 394 368**
**US-A-3 600 592**
**US-A-3 717 870**
**US-A-4 066 350**

**IBM TECHNICAL DISCLOSURE BULLETIN, April
1971, New York, USA F.F. FANG et al.
"Character selection system for Chinese
chracter keyboard" pages 3540-3541.**

(73) Proprietor: **Matsushita Electric Industrial Co.,
Ltd.**
**1006, Oaza Kadoma
Kadoma-shi Osaka-fu, 571 (JP)**

(72) Inventor: **Urata, Yoshihito**
**3-3-3 Aoyama Katano-shi
Osaka-fu (JP)**
Inventor: **Kubo, Hideyuki**
**24-19, Enoki-cho Suita-shi
Osaka-fu (JP)**
Inventor: **Sasaki, Toshiharu**
**2-1-52, Suimeidai
Kawanishi-shi Hyogo-ken (JP)**

(74) Representative: **Crawford, Andrew Birkby et al
A.A. THORNTON & CO. Northumberland House
303-306 High Holborn
London WC1V 7LE (GB)**

## Description

This invention relates to a keyboard apparatus, which enables data entry by operation of a key corresponding to a desired one of the plurality of items.

It is well known that these keyboards are very easily operated, but require many key sets, each set consisting of an item key and a label designating the input data. Inevitably, these keyboards have become large, and it becomes perplexing to find the desired key by searching the many labels.

However, there have been proposed several ways for removing such disadvantages. For example, cards or sheets, on which the labels are written, are located corresponding to the item key array, and can be changed as desired by a manual or automatic operation. Manual operation is not speedy, as is well known. Apparatus operated automatically, sometimes lack reliability in exchanging the card or sheet.

One example of an apparatus which automatically changes plates instead of sheets or cards is disclosed in patent specification US 3,394,368. This document discloses means operable in response to operation of select keys on the key board which pull out the required plate from a stack so that the labels written on the plate are displayed through windows on the keyboard so as to indicate the data input of the corresponding item key.

Another example of an apparatus which automatically changes sheets is disclosed in patent specification US 3,717,870. This document discloses a housing above the keyboard. The housing holds a stack of sheets each hingedly attached to one end of a card and folded over the card, the other end of the card being hingedly attached to the housing. Each card is provided with a respective tag and the tags are arranged in stepwise fashion. In order to select the required sheet, means are moved along the tags to the tag of the card which is the one before the required sheet. The means hold the tag and card and previous cards within the housing while the remaining cards pivot down under the effect of gravity to a vertical position leaving the required card at the front. The sheet is pivotably unfolded from the card so as to rest on top of the keyboard.

Yet another example of an apparatus which automatically selects and changes cards is disclosed in patent specification FR 2,405,823. This document discloses a holder having a plurality of select keys for selecting one of a plurality of data cards which are stored in a movable drawer in the holder. Each card is provided with a plurality of holes along the edge and card selection is by means of pins which enter the holes and retain a group of cards in the holder while the drawer is slid out of the holder to expose a part of the uppermost card in the drawer.

However, the problem with this arrangement is that it is designed merely for display of the data card, and the data card is not associated with a set of item keys for performing data entry, in contrast to the present invention. Thus the means for selecting the data cards extend along the major part of the housing and require a manual operation to extract the selected data card from the housing. This arrangement is too bulky for incorporation into keyboard apparatus where the selected data card is to be associated with a set of item keys and further the arrangement requiring manual operation is too cumbersome for operation with a set of item keys.

It is therefore an object of the present invention to provide a means for automatically translating a selected data card to a position which is associated with a set of item keys within a keyboard apparatus.

The present invention provides a keyboard apparatus of the type shown in FR—A—2405823, including a set of select keys for selecting a plurality of sheets on which respective sets of input data items are positioned, said sheets each having tag means thereon and located along an edge of a sheet, said tag means being arranged in stepwise fashion in the order in which the sheets are stacked, a cartridge having a tray for storing said sheets in piles and which is movable transversely of said cartridge, cartridge holding means for holding said cartridge in a position from which said tray is movable transversely of said cartridge between a first position and a second position corresponding to said display position in which the input data items on the top sheet in said tray are displayed and selecting means operable in response to said select keys for separating said sheets in said tray into two groups and holding the sheets in the first group out of said tray and leaving the sheets in the second group in said tray.

The present invention is characterised in that a set of item keys are provided for performing data entry and display means are associated with each item key for displaying a data item to be entered by corresponding item keys, wherein said sets of input data items are positioned in positions corresponding to said display means, and in that it includes translating means engageable with said tray and operable in response to said select keys for moving said tray from said second position corresponding to said display condition to said first position and holding said tray in said first position while said selecting means operates to release a previously held first group of sheets and allow them to return into said tray and to separate and hold a new first group of sheets, and then moving said tray back to said second position corresponding to said display position, wherein said translating means comprises: a motor; a wheel rotated by said motor; a driving arm which is rotatably mounted at one end to a pivot and engaged at the other end with said tray; and a cam mounted on one surface of said wheel for transferring the rotational motion of said wheel to a reciprocal turning motion of said driving arm so that said tray moves from said second position to said first position and returns from said first position to said second position by the reciprocal turning motion of said arm.

Features and advantages of the invention will become apparent upon considering the following detailed description of embodiments thereof when taken in conjunction with the accompanying drawings, in which:

Fig. 1 is a perspective view of a keyboard apparatus;

Fig. 2 is a perspective view of a cartridge;

Fig. 3 is a perspective view of the cartridge and a selecting means;

Figs. 4—1; and 4—2 are rear views of the cartridge for explaining the operation of selecting sheets;

Figs. 5—1; 5—2; and 5—3 are side views of the cartridge for explaining the operation of selecting the sheets;

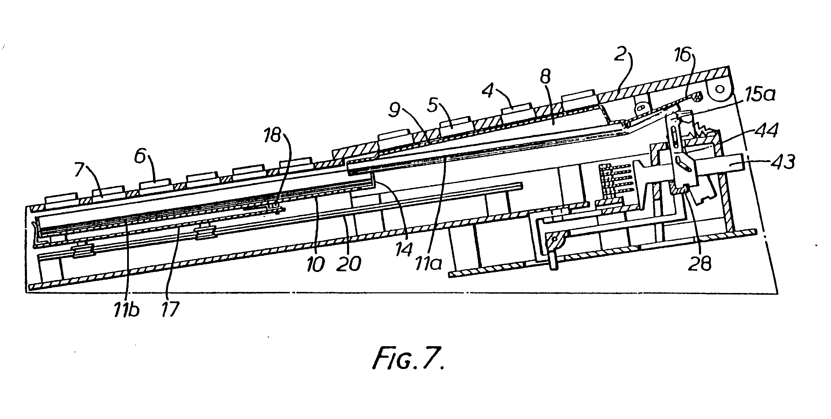

Fig. 6 and Fig. 7 are side views of the keyboard apparatus;

Fig. 8 is a top plan view of the keyboard apparatus;

Fig. 9 is a perspective view of a main portion of the selecting means;

Fig. 10 is a perspective view of logic plates and detector pins for explaining logical movement of the detector pins;

Fig. 11 and Fig. 12 are side views of the selecting means and the logic plates for explaining the operation of the selecting means;

Fig. 13 is a perspective view of another example of selecting means and another example of sheets as a modified embodiment; and

Fig. 14 is a bottom view of the sheet of Fig. 13.

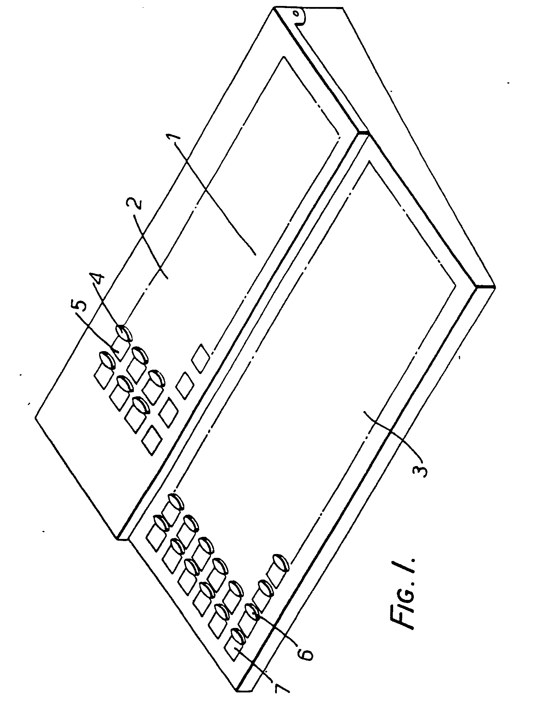

Referring now to Figure 1, it is an external view of the apparatus. A keyswitch panel 1 comprises a select key panel 2 and an item panel 3. These key panels consist of select keys 4, item keys 6, and transparent windows 5, 7 for displaying label designating the input data represented by these keys respectively.

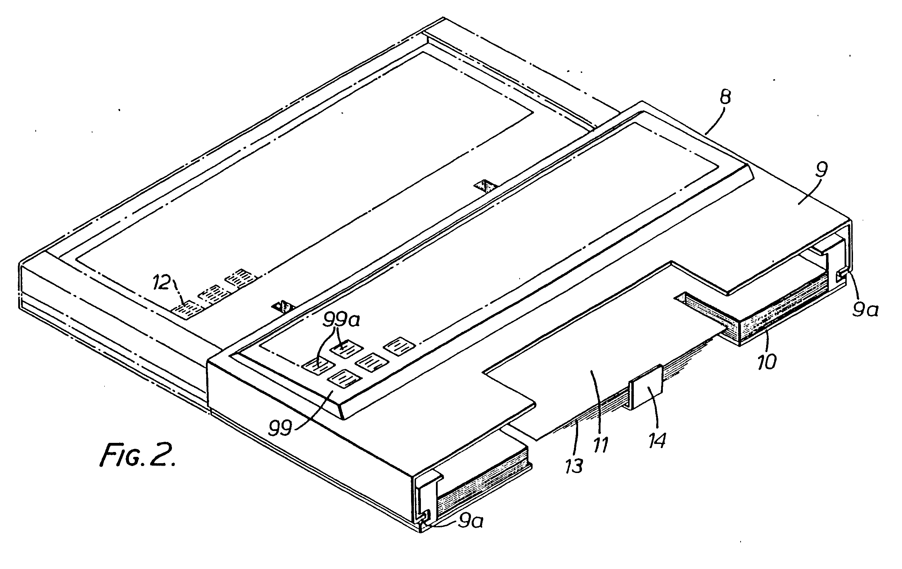

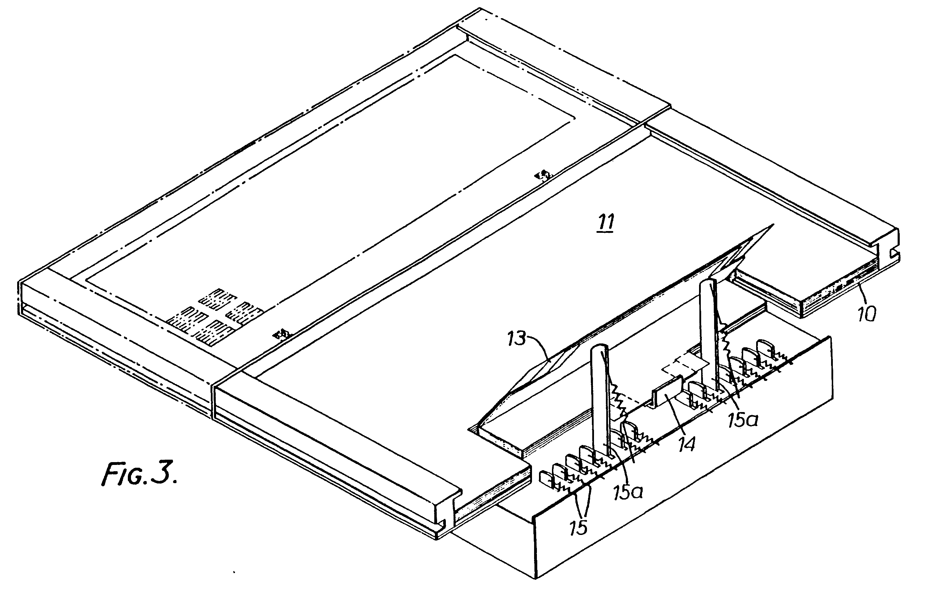

In Fig. 2, cartridge 8 consists of a case 9 and a tray 10. The tray 10 is able to slide out from case 9 guided by a support 9a. Sheets 11 are stored in the tray 10 in piles. Labels 12 are provided on the upper surface of each sheet. Every sheet's shape complements the shape of tab means 13 in Figs. 2 and 3. These tab means are of different sizes and are arranged as steps downward and on either side of a rear guide 14 of the tray. The guide 14 is arranged to guide the centre of the tab means 13 so as to enable separating means to be described in detail later to engage a selected one of the tab means on either side of the guide 14.

The top of the case 9 is provided with a section 99 on which there are further labels 99a disposed so as to be visible through the windows 5 of the apparatus when the cartridge 8 is in position. Each label 99a indicates in general the data items or labels on a respective one of the sheets 11.

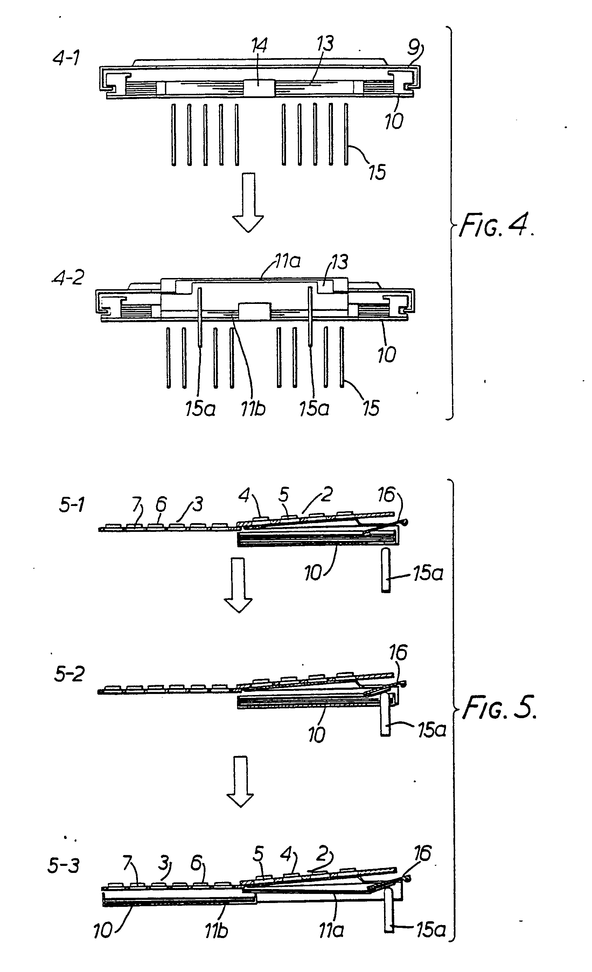

Separating pins or pairs of pins 15 are arranged corresponding to each tab means and the tray 10 is recessed adjacent the tabs to permit engagement of the tabs by the pins. Therefore, it will be seen in Figs. 3 and 4, when a pair of separating pins 15a is raised, sheets 11 are separated into two groups, the first group 11a at least whose tab means are thrust up and the second group 11b remaining in the tray means in Fig. 4. The tab means of the sheets 11a of the first group are held tightly by the raised pins 15a and a pressure plate 16 (Fig. 5).

Then as illustrated in Fig. 5, tray 10 is moved to the second position shown in Fig. 5—3 from the first position shown in Fig. 5—1. At the second position in Fig. 5—3, the labels on the uppermost sheet of the group 11b are displayed through transparent windows 7 of the item key panel 3. Of course, the labels on another sheet will be displayed when another pair of separator pins is raised.

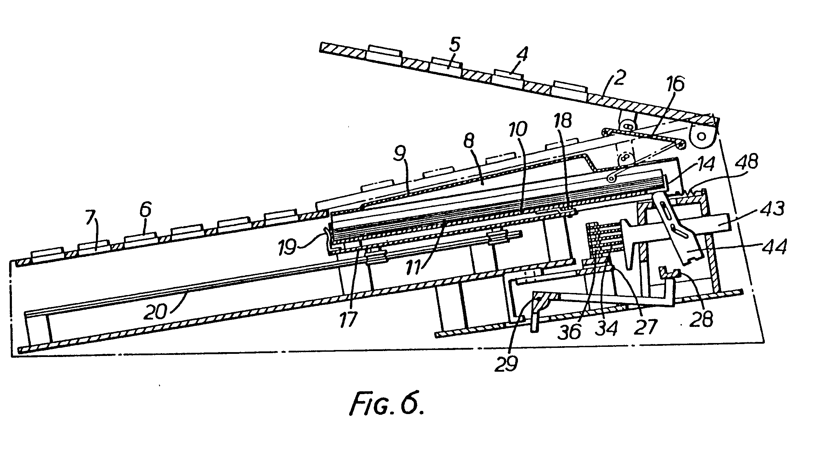

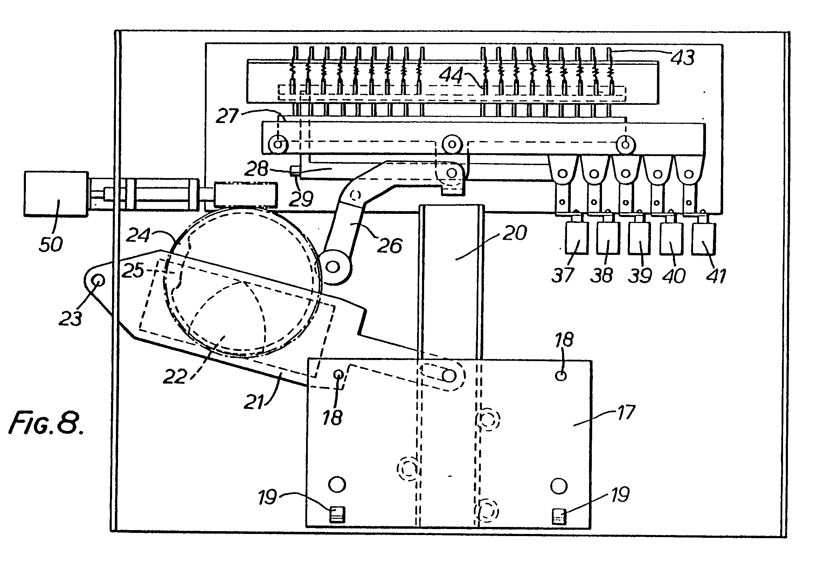

Fig. 6 shows opening the select key panel 2 which allows loading of the cartridge 8 into the apparatus. When the select key panel 2 is shut off, the cartridge 8 is loaded into the apparatus and the tray 10 of the cartridge 8 is received on a sliding member 17 and held in position on the member 17 by means of a pin and a pressure spring 19. The sliding member 17 is slidable on a rail 20 and is connected to a driving arm 21 shown in Fig. 8. The case 9 is fixed in position in the apparatus by means (not shown) in any convenient fashion.

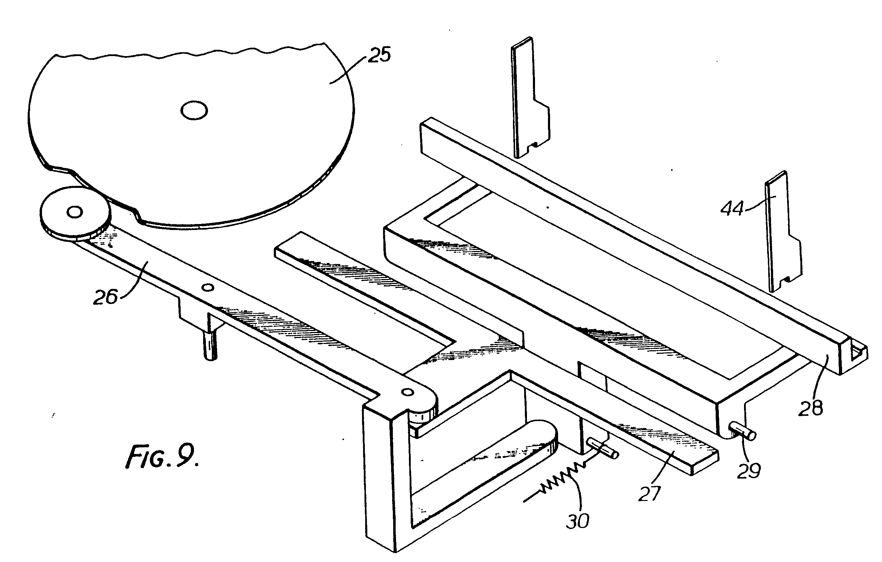

The driving arm 21 is moved in a reciprocating motion by a cam follower 22 pivotable about an axis 23 and responsive to movement of a cam 24 rotated by a motor 50. When the motor is driving, the tray 10 is driven between a first position and second position, having rest intervals at either position determined by the shape of the cam 24. Further in Figs. 8 and 9 the cam 24 has another cam profile 25 for driving an arm 26. The arm 26 is connected to a reset plate 27. The reset plate 27 moves a lifting bar 28 which rotates around an axis 29, and is biased by a spring 30 towards the rear of the apparatus.

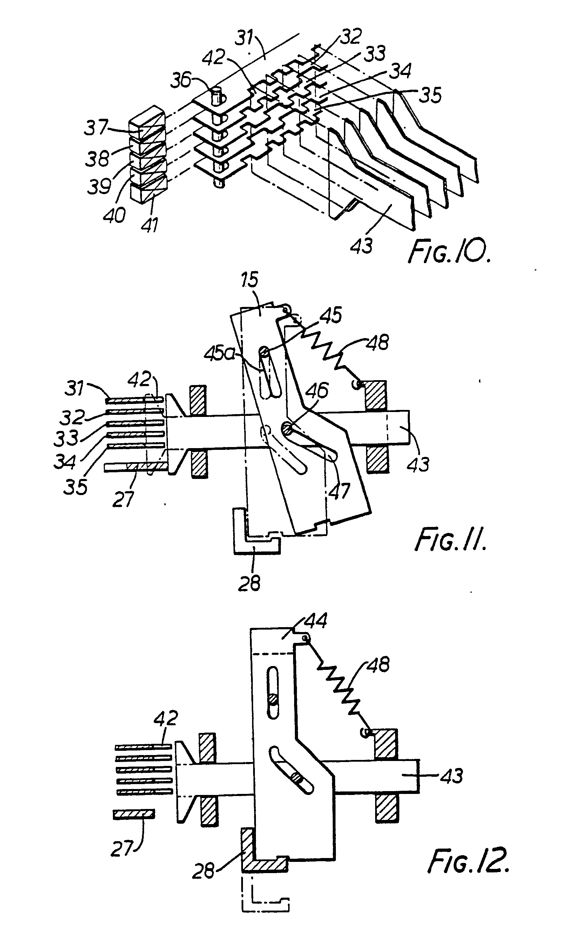

Selection of the desired pair of pins 15 to be raised in order to provide the correct labels for the item keys will now be described with reference to Figs. 10, 11 and 12.

Logic plates 31, 32, 33, 34 and 35 are piled together, located by a pin 36, received in slots in the plates and driven by solenoids 37, 38, 39, 40 and 41, respectively. The logic plates are shaped to provide a number of logical grooves 42. The number and length of the logical grooves are arranged so that when the solenoids are driven in a suitable logical combination a pair of the detecting pins 43 will be received in vertically extending lines of grooves. For example, employing five sets of logical plates and solenoids, one can make the combination, $2^5$ (= 32), and then one can select a pair of one among the thirty-two pairs of detecting pins.

Separating pins 15, guided by a shaft 45, extending through slots 45a in each pin are connected respectively to the detecting pins 43 by a pin 46 and a slit 47, and are biased into a vertical position adjacent the lifting bar 28 by a spring 48, respectively. Also, by virtue of the spring 48, the detecting pins 43 are biased toward the logical plates. Also, when the logical plates are driven by the solenoids, a pair of detecting pins enter the grooves 42, and a pair of separator pins 15 are shifted toward the lifting bar 28. When the lifting bar 28 is moved up, the pair of separator pins selected are raised and sheets are separated as illustrated in Fig. 3. On lowering the bar 28 and de-energizing the solenoids, the detecting pins 43 are pushed back in their place and the logical plates are reset for the next changing sheet movement.

Now, explaining a whole movement of the apparatus:

1. Pushing a desired select key, the motor rotates and solenoids are moved in a particular logical combination so as to select the desired sheet.

2. While the motor rotates, the tray 10 is moved into the cartridge case from the position of display shown in Fig. 5—3 and rests at the top of the stroke.

3. Reset plate is retired by the operation of the cam means, and the lifting bar 20 is returned downward retracting the pair of separator pins 15a already raised. So, the sheets 11a return downward and come back into the tray.

4. A different pair of separator pins 15 are selected for the foregoing reason, and raised by the movement of the lifting bar 28 again to separate the sheets in the tray.

5. The tray 10 moves backwards once more, and rests at the position of display, and the motor is stopped.

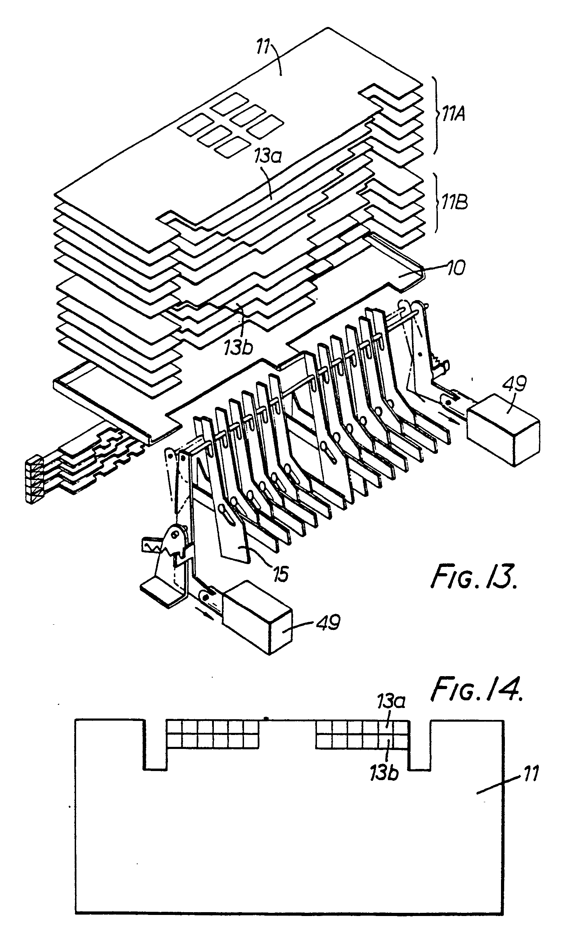

Figures 13 and 14 show a modification of the invention. It will be seen that there are two stacks of sheets and the first stack 11A has tabs 13a as previously, while the second stack 11B has tabs 13b of shorter depth than the tabs 13a. The separator pins 15 are moved, in this embodiment, between tabs 13a and 13b by the operation of solenoids 49 acting on bell crank levers which are biased to the position to select the tabs 13a.

From the foregoing description and drawings, it will be obvious that this invention enables a keyboard apparatus which is operated easily and speedily. Also, as apparent from the foregoing, this invention enables handling of the cartridge very easily, because the cartridge of this invention is very compact, and further it is very easy to exchange sheets to other new ones. Further, it enables a keyboard apparatus to maintain higher reliability because sheets, which sometimes curl up easily and change shape, are stored in a tray in natural conditions planely aligned without rolling up or breaking or other various deformations.

Furthermore, as apparent from the foregoing, it enables dealing with many sheets with one cartridge, for the reason that the sheets are stored in the tray in piles without large space. Also, it enables using many more sheets for the reason that many more tag sets are supplied.

## Claims

1. A keyboard apparatus comprising: a set of select keys (4) for selecting a plurality of sheets (11) on which respective sets of input data items are positioned, said sheets (11) each having tag means (13) thereon and located along an edge of a sheet, said tag means (13) being arranged in stepwise fashion in the order in which the sheets are stacked;

a cartridge (8) having a tray (10) for storing said sheets (11) in piles and which is movable transversely of said cartridge (8);

cartridge holding means (18, 19) for holding said cartridge (8) in a position from which said tray (10) is movable transversely of said cartridge (8) between a first position and a second position corresponding to said display position in which the input data items on the top sheet (11) in said tray (10) are displayed;

selecting means (15, 16) operable in response to said select keys (4) for separating said sheets (11) in said tray (10) into two groups and holding the sheets (11) in the first group out of said tray (10) and leaving the sheets (11) in the second group in said tray (10); characterised in that a set (3) of item keys (6) are provided for performing data entry and display means (5, 7) are associated with each item key for displaying a data item to be entered by corresponding item keys, wherein said sets of input data items are positioned in positions corresponding to said display means, and translating means (21, 22, 24, 50) is provided engagable with said tray (10) and operable in response to said select keys (4) for moving said tray (10) from said second position corresponding to said display condition to said first position and holding said tray (10) in said first position while said selecting means (15) operates to release a previously held first group of sheets (11) and allow them to return into said tray (10) and to separate and hold a new first group of sheets, and then moving said tray (10) back to said second position corresponding to said display position, wherein said translating means comprises: a motor (50); a wheel (24) rotated by said motor (50); a driving arm (21) which is rotatably mounted at one end to a pivot (23) and engaged at the other end with said tray (10); and a cam (22) mounted on one surface of said wheel (24) for transferring the rotational motion of said wheel (24) to a reciprocal turning motion of said driving arm (21) so that said tray (10) moves from said second position to said first position and returns from said first position to said second position by the reciprocal motion of said arm (21).

2. An apparatus as claimed in claim 1 wherein said cartridge means (8) comprises a casing (9) having an open portion, said tray (10) being mounted in said casing (9) for transverse movement out of said casing and being exposed through said open portion for being engaged by said translating means (21, 22, 24, 50).

3. An apparatus as claimed in claim 1 in which said key switch means (1—7) further has means associated with each select key (4) for displaying the set of data entry items which is selected by the corresponding select key (4), and said cartridge (8) is positioned by said cartridge holding means (18, 19) beneath said select keys (4) and has the sets of data entry items thereon corresponding to the sheets (11) in the cartridge (8) and positioned for being displayed through corresponding display means for the select key (4).

4. An apparatus as claimed in claim 1 in which the end of the tray (10) facing away from the display means (5, 7) is open for giving access to said selecting means (15, 16), and said tray (10) has guiding means (14) thereon projecting into said open end for holding the sheets (11) in said tray (10) during movement of said tray (10) from said first position to said second position corresponding to said display position.

5. An apparatus as claimed in claim 1 wherein said selecting means comprises a pressure plate (16) provided above said tag means of said sheets and a plurality of pins (15) corresponding to said tag means, a selected one (15a) of said plurality of pins (15) being lifted to press tightly onto said pressure plate (16) a respective one of said tag means (13) and the tag means (13) above said one tag means, whereby said first group of sheets (11) are moved out of said tray (10) and tightly held between said selected one of said plurality of pins (15) and said pressure plate (16).

6. An apparatus as claimed in claim 5 wherein said selecting means further comprises lifting means (26, 27, 28) for lifting said selected one of said plurality of pins (15), and said translating means further comprises another cam (25) mounted on the other surface of said wheel (24) and engagable with said lifting means (26, 27, 28) for actuating said lifting means when said tray (10) is in said first position.

**Patentansprüche**

1. Tastaturvorrichtung, enthaltend einen Satz von Wähltasten (4) zum Auswählen einer Mehrzahl von Karten (11), auf denen entsprechende Sätze von Datenwörtern angeordnet sind, wobei die Karten (11) jeweils Fahnen (13) aufweisen, die längs eines Randes einer Karte angeordnet sind, wobei die Fahnen (13) stufenartig in der Reihenfolge, in der die Karten gestapelt sind, angeordnet sind;
eine Kassette (8) mit einer Lade (10) zum Speichern der Karten (11) in Stapeln und die quer zu der Kassette (8) beweglich ist;
eine Kassettenhalteeinrichtung (18, 19) zum Halten der Kassette (8) in einer Position, von der aus die Lade (10) quer zu der Kassette (8) zwischen einer ersten Position und einer zweiten Position entsprechend der Darstellposition beweglich ist, in der die eingegebenen Datenwörter auf der obersten Karte (11) in der Lade (10) dargestellt werden;
eine Wähleinrichtung (15, 16), die in Abhängigkeit von den Wähltasten (4) betätigbar ist, um die Karten (11) in der Lade (10) in zwei Gruppen zu trennen und die Karten (11) in der ersten Gruppe außerhalb der Lade (10) zu halten und die Karten (11) in der zweiten Gruppe in der Lade (10) zu halten; dadurch gekennzeichnet, daß ein Satz (3) von Datenworttasten (6) vorgesehen ist zur Ausführung der Dateneingabe und daß Anzeigeeinrichtungen (5, 7) jeder Datenworttaste zugeordnet sind, um ein Datenwort, das durch die entsprechenden Datenworttasten einzugeben ist, anzuzeigen, wobei die Sätze von Eingangsdatenwörtern an Positionen entsprechend der Anzeigeeinrichtung positioniert werden, und daß eine Verschiebeeinrichtung (21, 22, 24, 50) vorgesehen ist, die mit der Lade (10) in Eingriff bringbar ist und in Abhängigkeit von den Wähltasten (4) betätigbar ist, um die Lade (10) aus der zweiten Position entsprechend dem Darstellungszustand in die erste Position zu bringen und die Lade (10) in der ersten Position zu halten, während die Wähleinrichtung (15) wirksam ist, um eine zuvor gehaltene erste Gruppe von Karten (11) loszulassen und ihnen zu erlauben, in die Lade (10) zurückzukehren und um eine neue erste Gruppe von Karten zu trennen und zu halten und dann die Lade (10) zurück in die zweite Position entsprechend der Darstellungsposition zu bringen, wobei die Verschiebeeinrichtung enthält: einen Motor (50); ein Rad (24), das von dem Motor (50) gedreht wird; einen Antriebsarm (21), der drehbar an einem Ende an einem Zapfen (23) gelagert ist und mit dem anderen Ende mit der Lade (10) in Eingriff steht; und eine Nocke (22), die an einer Seite des Rades (24) befestigt ist, um die Drehbewegung des Rades (24) in eine hin- und hergehende Schwenkbewegung des Antriebsarms (21) umzusetzen, so daß sich die Lade (10) aus der zweiten Position in die erste Position bewegt und von der ersten Position in die zweite Position durch die hin- und hergehende Schwenkbewegung des Arms (21) zurückkehrt.

2. Vorrichtung nach Anspruch 1, bei der die Kassette (8) ein Gehäuse (9) mit einem offenen Abschnitt aufweist, wobei die Lade (10) in dem Gehäuse (9) für die Querbewegung aus dem Gehäuse heraus angebracht ist und durch den offenen Abschnitt heraussteht, um von der Verschiebeeinrichtung (21, 22, 24, 50) beaufschlagt zu werden.

3. Vorrichtung nach Anspruch 1, bei der die Tastenschaltereinrichtung (1—7) weiterhin Einrichtungen aufweist, die jeder Wähltaste (4) zugeordnet sind, um den Satz von Dateneingabewörtern anzuzeigen, der von der entsprechenden Wähltaste (4) ausgewählt ist, und bei der die Kassette (8) von der Kassettenhalteeinrichtung (18, 19) unterhalb den Wähltasten (4) gehalten ist und Sätze von Dateneingabewörtern darauf aufweist, die den Karten (11) in der Kassette (8) entsprechen und die dazu positioniert sind, durch die zugehörige Anzeigeeinrichtung für die Wähltaste (4) zur Darstellung gebracht zu werden.

4. Vorrichtung nach Anspruch 1, bei der das Ende der Lade (10), das von der Anzeigeeinrichtung (5, 7) wegweist, offen ist, um Zugang zu der Wähleinrichtung (15, 16) zu gewähren, und daß die Lade (10) eine Führungseinrichtung (14) daran aufweist, die in das genannte offene Ende vorsteht, um die Karten (11) in der Lade (10) während der Bewegung der Lade (10) von der ersten Position in die zweite Position entsprechend der Darstellungsposition zu halten.

5. Vorrichtung nach Anspruch 1, bei der die Wähleinrichtung enthält: eine Druckplatte (16), die oberhalb der Fahnen der Karten angeordnet ist, und eine Mehrzahl von Stiften (15), die den Fahnen entsprechen, wobei ein ausgewählter (15a) aus der Vielzahl der Stifte (15) angehoben wird, um fest auf die Druckplatte (16) eine entsprechende der Fahnen (13) und die Fahnen (13) oberhalb der genannten einen Fahne zu drücken, wodurch die genannte erste Gruppe von Karten (11) aus der Lade (10) herausbewegt wird und fest zwischen dem ausgewählten der Vielzahl von Stiften (15) und der Druckplatte (16) gehalten wird.

6. Vorrichtung nach Anspruch 5, bei der die Wähleinrichtung weiterhin eine Hubeinrichtung (26, 27, 28) zum Anheben des ausgewählten aus der Vielzahl von Stiften (15) aufweist, und wobei die Verschiebeeinrichtung weiterhin einen weiteren Nocken (25) enthält, der an der anderen Seite des Rades (24) befestigt ist und mit der Hubeinrichtung (26, 27, 28) in Eingriff bringbar ist, um die Hubeinrichtung zu betätigen, wenn sich die Lade (10) in der genannten ersten Position befindet.

**Revendications**

1. Appareil à clavier comportant: un ensemble de touches de sélection (4) destinées a sélectionner plusieurs feuilles (11) sur lesquelles sont positionnés des ensembles respectifs d'articles de données d'entrée, lesdites feuilles (11) comportant chacune des languettes (13) et positionnées le long d'un bord d'une feuille, lesdites languettes (13) étant disposées en gradins dans l'ordre dans lequel les feuilles sont empilées; une cassette (8) avec un plateau (10) pour emmagasiner lesdites feuilles (11) en piles et qui est mobile transversalement par rapport à ladite cassette (8); un support de cassette (18, 19) destiné à maintenir ladite cassette (8) dans une position à partir de laquelle ledit plateau (10) est mobile transversalement par rapport à ladite cassette (8) entre une première position et une seconde position correspondant à la position de visualisation dans laquelle les articles de données d'entrée sur la feuille du dessus (11) dans ledit plateau (10) apparaissent; un dispositif de sélection (15, 16) fonctionnant en réponse auxdites touches de sélection (4) pour séparer lesdites feuilles (11) dans ledit plateau (10) en deux groupes et maintenant les feuilles (11) du premier groupe hors dudit plateau (10) et laissant les feuilles (11) du second groupe dans ledit plateau (10); caractérisé en ce que un ensemble (3) de touches d'articles (6) est prévu pour effectuer une entrée de données et un dispositif de visualisation (5, 7) est associé avec chaque touche d'article pour visualiser un article de données à introduire par les touches d'articles correspondantes, dans lequel lesdits ensembles d'articles de données d'entrée sont placés dans des positions correspondant audit dispositif de visualisation, et en ce que un dispositif de translation (21, 22, 24, 50) est prévu, pouvant engager ledit plateau (10) et fonctionnant· en réponse auxdites touches de sélection (4) pour déplacer ledit plateau (10) de ladite seconde position correspondant à la condition de visualisation jusqu'à première position et maintenant ledit plateau (10) dans ladite première position pendant que le dispositif de sélection (15) libère un premier groupe de feuilles (11) précédemment maintenu et leur permet de revenir dans ledit plateau (10), et pour séparer et maintenir un autre premier groupe de feuilles, et déplaçant ensuite ledit plateau (10) en retour vers ladite seconde position correspondant à ladite position de visualisation, dans lequel ledit dispositif de translation comporte: un moteur (50); une roue (24) mise en rotation par ledit moteur (50); un levier d'entrainement (21) monté pour tourner à une extrémité sur un pivot (23) et engagé avec l'autre extrémité dudit plateau (10); et une came (22) montée sur une surface de ladite roue (24) pour transformer le mouvement de rotation de ladite roue (24) en un mouvement angulaire alternatif dudit levier d'entrainement (21) de manière que ledit plateau (10) se déplace de ladite seconde · position jusqu'à ladite première position et revienne de ladite première position à la dite seconde position par le mouvement angulaire alternatif dudit levier (21).

2. Appareil selon la revendication 1, dans lequel ladite cassette (8) comporte un boitier (9) avec une partie ouverte, ledit plateau (10) étant monté dans ledit boitier (9) pour un mouvement transversal hors de ladite cassette et étant exposé par ladite partie ouverte pour être engagé par ledit dispositif de translation (21, 22, 24, 50).

3. Appareil selon la revendication 1 dans lequel ledit dispositif de commutation à touches (1—7) comporte en outre un dispositif associé avec chaque touche de sélection (4) pour visualiser l'ensemble des articles d'entrée de données qui est sélectionné par la touche de sélection (4) correspondante, et ladite cassette (8) étant positionnée par ledit support de cassette (18, 19) audessous desdites touches de sélection (4), avec les ensembles d'articles d'entrée de données audessus correspondant aux feuilles (11) dans la cassette (8), et positionné pour être visualisé par le dispositif de visualisation correspondant à la touche de sélection (4).

4. Appareil selon la revendication 1, dans lequel l'extrémité du plateau (10) opposée au dispositif de visualisation (5, 7) est ouvert pour permettre l'accès audit dispositif de sélection (15, 16) et ledit plateau (10) comportant un dispositif de guidage (14) en saillie dans ladite extrémité ouverte pour maintenir les feuilles (11) dans ledit plateau (10) pendant le mouvement dudit plateau (10) depuis la première position jusqu'à ladite seconde position correspondant à ladite position de visualisation.

5. Appareil selon la revendication 1, dans lequel ledit dispositif de sélection comporte une plaque de pression (16) prévu au-dessus desdites languettes desdites feuilles et plusieurs aiguilles (15) correspondant auxdites languettes, l'une sélectionnée (15a) desdites plusieurs aiguilles (15) étant soulevée pour serrer fermement sur ladite plaque de pression (16) l'une correspondante desdites languettes (13), et lesdites languettes (13) au-dessus de ladite languette, de manière que ledit premier groupe de feuilles (11) soit déplacé hors du plateau (10) et serré fermement entre celle sélectionnée desdites plusieurs aiguilles (15) et ladite plaque de pression (16).

6. Appareil selon la revendication 5, dans lequel ledit dispositif de sélection comporte en outre un dispositif de soulèvement (26, 27, 28) destiné à soulever celle sélectionnée desdites plusieurs aiguilles (15) et ledit dispositif de translation comportant en outre une autre came (25) montée sur l'autre surface de ladite roue (24) et pouvant être engagée par ledit dispositif de soulèvement (26, 27, 28) pour actionner ledit dispositif de soulèvement quand ledit plateau (10) se trouve dans ladite première position.

Fig. I.

Fig. 2.

FIG.3.

0 034 485

3

FIG. 4.

FIG. 5.

4

FIG. 6.

FIG.7.

0 034 485

Fig.8.

FIG.9.

25

26

44

28

29

27

30

0 034 485

FIG. 10.

FIG. 11.

FIG. 12.

FIG. 13.

FIG. 14.